# EUROPEAN PATENT SPECIFICATION

(11) **EP 2 085 276 B1**
(45) Date of publication and mention of the grant of the patent: **27.05.2015**
(21) Application number: 09150960.4
(22) Date of filing: 20.01.2009
(51) Int. Cl.: B60T 8/88

(54) **Distributed electrical/electronic architectures for brake-by-wire brake systems**
Verteilte elektrische/elektronische Architekturen für mechatronische Bremssysteme
Architectures électriques/électroniques distribuées pour des systèmes de freinage intégré

(30) Priority: 29.01.2008 US 11662
(43) Date of publication of application: 05.08.2009
(73) Proprietor: BWI Company Limited S.A., 1628 Luxembourg (LU)
(72) Inventor: Degoul, Paul, 75014 Paris (FR); Disser, Robert J., Dayton, OH 45419 (US)
(74) Representative: Fox-Male, Nicholas Vincent Humbert

(56) References cited:
- EP-A- 0 832 800
- EP-A- 0 924 125
- WO-A-98/36956
- DE-A1- 19 826 131
- US-B1- 6 345 225

## Description

### BACKGROUND

The present application is directed to brake-by-wire brake systems and, more particularly, to distributed E/E (electrical/electronic) architectures for brake-by-wire brake systems.

Brake-by-wire brake systems have been developed to replace the traditional hydraulic connection between the brake pedal and the braking devices with electrical connections. Brake-by-wire brake systems typically employ a traditional pedal connected to a pedal feel emulator adapted to simulate the feel of a traditional hydraulic brake system, while generating signals indicative of the driver's braking intent.

Typically, a single electronic control unit having multiple internal redundancies is used to convert the driver's braking intent, as determined by various sensors (e.g., position and/or force sensors), into command signals that are electronically communicated to the braking devices as electrical signals. The multiple redundancies ensure safe operation of the brake-by-wire system in the event of a fault in one or more of the internal components of the electronic control unit. This electronic control unit is fault-tolerant. However, such single electronic control units often are complex and expensive to manufacture and install.

Typical examples of such brake-by-wire brake systems are provided in document US 6 345 225 B1 and DE 198 26 131 A1.

Accordingly, there is a need for a safe and low cost system and method for controlling braking devices in response to driver inputs in brake-by-wire brake systems.

### SUMMARY

The present invention provides a system as defined in claim 1.

The system may include the features of any one or more of dependent claims 2 to 11.

Other aspects of the disclosed distributed E/E architectures for brake-by-wire brake systems will become apparent from the following description, the accompanying drawings and the appended claims.

### Brief Description of the Drawings

Fig. 1 is a block diagram of a brake-by-wire brake system according to one aspect of the disclosed distributed E/E architectures for brake-by-wire brake systems;
Fig. 2 is a block diagram of a brake pedal assembly of the brake-by-wire brake system of Fig. 1; and
Fig. 3 is a block diagram of a brake pedal sensor of the brake-by-wire brake system of Fig. 1.

### Description of the Preferred Embodiments

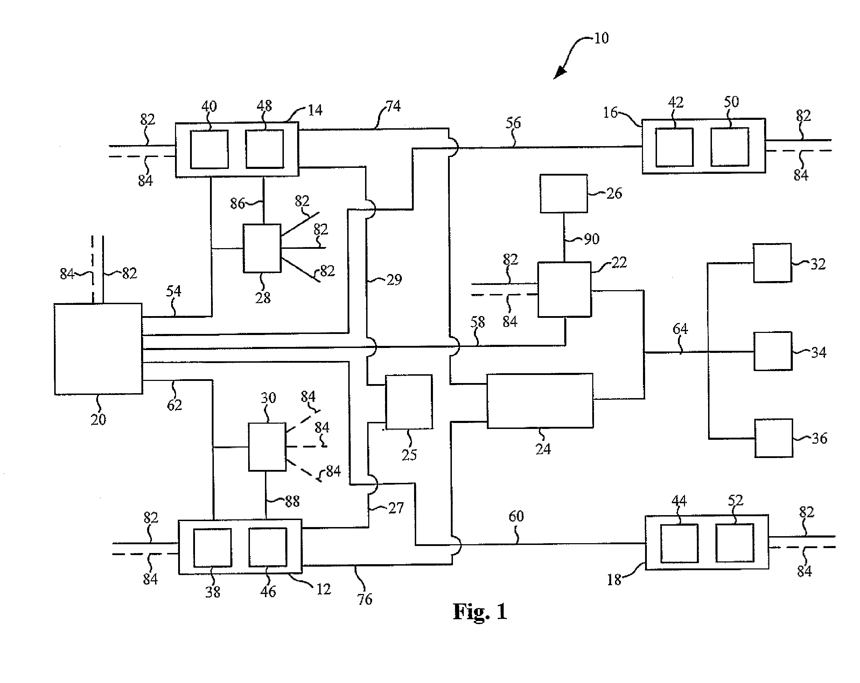

In Fig. 1 there is shown a brake-by-wire brake system, generally designated 10, according to one aspect of the disclosed distributed E/E architectures for brake-by-wire brake systems. The system 10 may include a left-front corner brake module 12, a right-front corner brake module 14, a right-rear corner brake module 16, a left-rear corner brake module 18, a power distribution box 20, a supervisory electronic control unit 22, a brake switch 24, a park brake switch 25, brake pedal sensors 26, 28, 30 and brake lights 32, 34, 36.

Each of the corner brake modules 12, 14, 16, 18 may include an associated braking device 38, 40, 42, 44 and associated control electronics 46, 48, 50, 52. The control electronics 46, 48, 50, 52 may be integrated into the braking devices 38, 40, 42, 44 or localized in the general area of the associated braking devices 38, 40, 42, 44 as separate electronic control units. The braking devices 38, 40, 42, 44 may be electric devices, electro-mechanical devices or the like. The corner brake modules 12, 14, 16, 18 may implement foundation brake function and, more generally, may implement all brake and brake-related functions, such as dynamic rear proportioning, the anti-lock braking system, the traction control system and vehicle stability enhancement.

The power distribution box 20 may be a fault-tolerant power network and may distribute electrical power to the right-front module 14 and sensor 28 over line 54, to the right-rear module 16 over line 56, to the left-rear module 18 over line 60 and to the left-front module 12 and sensor 30 over line 62. The supervisory electronic control unit 22 may receive power from the power distribution box 20 over line 58 or, alternatively, may be directly powered by the vehicle battery (not shown). The power distribution box 20 may include control electronics (e.g., an electronic control unit) and may selectively apply electrical power to lines 54, 56, 58, 60, 62 to selectively isolate components of the system 10 that are malfunctioning, thereby allowing the system 10 to continue to operate despite one or more malfunctions in the system.

At this point, those skilled in the art will appreciate that power distribution box 20 is an optional component and the system 10 may be powered using any available means. For example, the right-front module 14, sensor 28, right-rear module 16, vehicle dynamics module 22, left-rear module 18, left-front module 12 and sensor 30 may each be directly connected to one or more batteries (not shown) or other power sources.

The supervisory electronic control unit 22 may compliment the corner brake modules 12, 14, 16, 18 and may implement high-level braking functions, such as an anti-lock braking system, a traction control system, an electronic stability control system or other vehicle functions. In one aspect, the supervisory electronic control unit 22 may be a vehicle dynamics module, as is well known in the art. Optionally, the supervisory electronic control unit 22 may be connected to the brake lights 32, 34, 36 by line 64 such that the brake lights 32, 34, 36 may be illuminated when the supervisory electronic control unit 22 performs certain high-level braking functions.

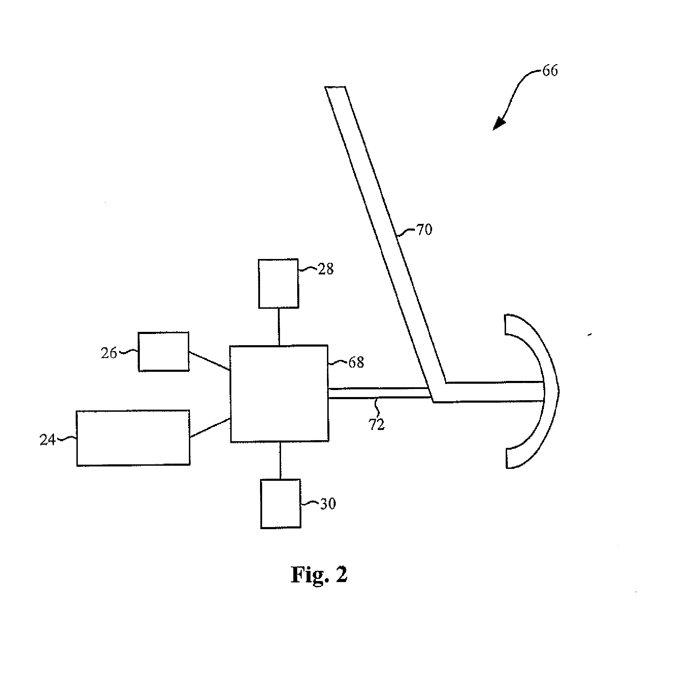

As shown in Fig. 2, the brake switch 24 and brake pedal sensors 26, 28, 30 may be associated with a brake pedal assembly 66. Those skilled in the art will appreciate that two or more brake switches 24 may be used without departing from the scope of the present disclosure. The brake pedal assembly 66 may include a pedal feel emulator 68 and a brake pedal 70 connected to the pedal feel emulator 68 by a mechanical connection 72. The pedal feel emulator 68 may be a damper, a spring or the like adapted to provide resistance when a user depresses the brake pedal 70, thereby emulating the feel of a traditional hydraulic brake system.

The brake switch 24 may monitor movement of the brake pedal 70 to detect whether a user has depressed the brake pedal. As shown in Fig. 1, signals from the brake switch 24 may be directly communicated to the right-front corner brake module 14 over line 74 and left-front corner brake module 12 over line 76. However, those skilled in the art will appreciate that the brake switch 24 may be in direct communication with any one or more of the corner brake modules 12, 14, 16, 18, regardless of whether or not the corner brake module is directly connected to a sensor. Furthermore, like the supervisory electronic control unit 22, the brake switch 24 may be connected to the brake lights 32, 34, 36 by line 64 such that the brake lights 32, 34, 36 may be illuminated when the brake pedal 70 (Fig. 2) is manipulated.

When the brake switch 24 is actuated, and regardless of other inputs to the system 10 or the lack thereof, the corner brake modules 12, 14 that are directly connected to the brake switch 24 may automatically apply a certain predetermined amount of braking force. For example, actuation of the brake switch 24 may initiate an automatic 20 percent brake apply. Furthermore, the automatic brake apply stemming from actuation of the brake switch 24 may be communicated to the other corner brake modules 16, 18 in the system 10 (i.e., those not directly connected to the brake switch 24) in the manner discussed in detail herein.

Accordingly, in the event of a system failure, such as a failure of the communication bus (discussed below), the driver's intent to brake may be detected by the brake switch 24 and directly communicated to at least one corner brake module 12, 14 of the system 10 (i.e., to those corner brake modules that are directly connected to the brake switch 24) despite the system failure, thereby providing the system 10 with a first redundant, fail-safe option.

The park brake switch 25 may initiate a parking brake procedure, similar to a traditional parking brake, wherein one or more of the corner brake modules 12, 14, 16, 18 are electronically actuated. For example, as shown in Fig. 1, signals from the park brake switch 25 may be directly communicated to the right-front corner brake module 14 over line 29 and the left-front corner brake module 12 over line 27. However, those skilled in the art will appreciate that the park brake switch 25 may be in direct communication with any one or more of the corner brake modules 12, 14, 16, 18, regardless of whether or not the corner brake module is directly connected to a sensor. Furthermore, two or more park brake switches 25 may be used without departing from the scope of the present disclosure.

Therefore, when the park brake switch 25 is actuated, and regardless of other inputs to the system 10 or the lack thereof, the corner brake modules 12, 14 that are directly connected to the park brake switch 25 may automatically apply a certain predetermined amount of braking force or undergo a certain predetermined braking routine. For example, actuation of the park brake switch 25 while traveling a 40 miles per hour may initiate a braking routing that arrives at 100 percent brake apply over 5 seconds. Furthermore, the automatic brake routine initiated in response to actuation of the park brake switch 25 may be communicated to the other corner brake modules 16, 18 in the system 10 (i.e., those not directly connected to the park brake switch 25) in the manner discussed in detail herein.

Accordingly, in the event of a system failure, such as a failure of the communication bus, the driver may actuate the park brake switch 25 to initiate an emergency brake routine. The emergency brake routine may be performed by at least those corner brake modules that are directly connected to the park brake switch 25, thereby providing the system 10 with a second redundant, fail-safe option.

The system 10 may include three brake pedal sensors 26, 28, 30, which may be any sensors capable of detecting a driver's braking intent. Three brake pedal sensors 26, 28, 30 may be used in system 10 for redundancy. However, those skilled in the art will appreciate that any number of brake pedal sensors may be used without departing from the scope of the present disclosure. These sensors may be with or without internal redundancy. In order to be single fault tolerant, minimum safety requirements may require at least three basic sensors (i.e., without internal redundancy), or two sensors with internal redundancy (i.e., two fail-safe sensors). Particularly, in the case where both sensor 28 connected to the right-front brake module 14 and sensor 30 connected to the left-front corner module 12 present internal redundancy (i.e., sensors 28 and 30 are fail-silent sensors), the third sensor 26 connected to the supervisory electronic control unit 22 may no longer be necessary.

Brake pedal sensor 26 may be a force sensor, a pedal travel sensor or the like and may communicate sensor signals to the supervisory electronic control unit 22 by a direct connection 90, such as, for example, a single wire analog connection. Brake pedal sensors 28, 30 may be modified brake pedal sensors, such as modified force sensors, modified pedal travel sensors or the like, and may communicate sensor signals directly to the right-front 14 and left-front 12 corner brake modules. However, those skilled in the art will appreciate that alternative architectures may be employed without departing from the scope of the present disclosure. For example, modified sensors 28, 30 may be split front-rear (e.g., sensor 28 may be directly connected to the right-front corner brake module 14 and sensor 30 may be directly connected to the left-rear corner brake module 18) or in a four-corner arrangement.

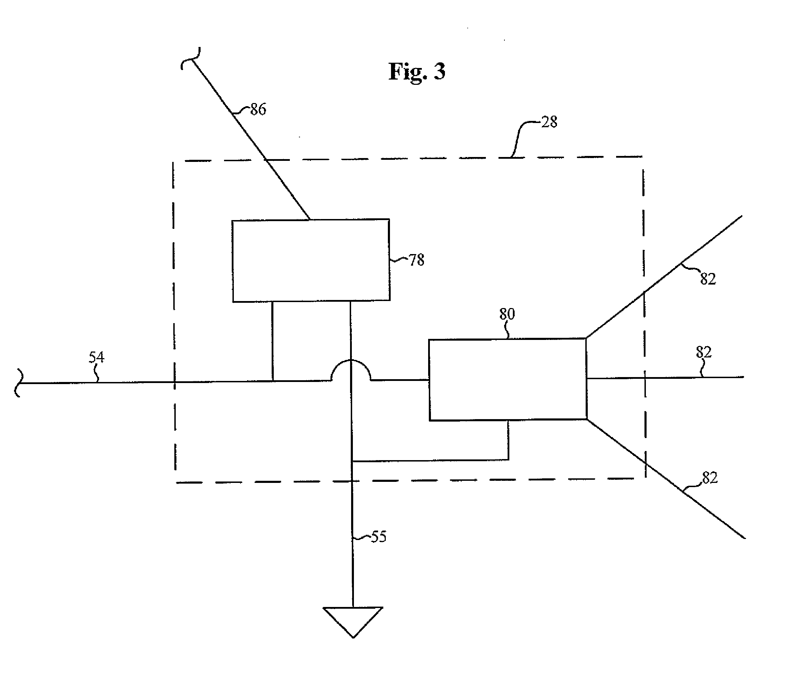

The modified brake pedal sensors 28, 30 may be brake pedal sensors incorporating an integral star coupler. In particular, referring to Fig. 3, sensor 28, like sensor 30, may include sensor electronics 78 and a star coupler 80, each of which may be connected to a power source (line 54) and ground (line 55). The sensor electronics 78 of sensor 28 may be connected to the right-front corner brake module 14 by a direct connection 86, such as, for example, a single wire analog connection.

Thus, the star coupler 80 in sensor 28 may facilitate communication between the left-front corner brake module 12, the right-front corner brake module 14, the right-rear corner brake module 16, the left-rear corner brake module 18, the power distribution box 20 and/or the supervisory electronic control unit 22 over a first channel (shown by solid ray lines 82) of a serial communication bus. Furthermore, as shown in Fig. 1, sensor 30 may be a modified sensor incorporating an integral star coupler and may be connected to the left-front corner brake module 12 by a direct connection 88, such as, for example, a single wire analog connection. Therefore, the star coupler (not shown) of sensor 30 may facilitate communication between the left-front corner brake module 12, the right-front corner brake module 14, the right-rear corner brake module 16, the left-rear corner brake module 18, the power distribution box 20 and/or the supervisory electronic control unit 22 over a second channel (shown by broken ray lines 84) of the serial communication bus.

The serial communication bus may be any communication bus, such as a time-triggered communication bus with partial or complete channel redundancy. The two modified sensors 28, 30 may be used to facilitate communication over two separate channels of a communication bus. However, those skilled in the art will appreciate that any number of modified sensors may be used with system 10 without departing from the scope of the present disclosure. Design considerations, including the quantity and placement of modified sensors, may be driven by the number of available communication bus channels and the desired amount of redundancy.

Accordingly, sensor signals from modified sensor 28 may be directly communicated to the right-front corner brake module 14 by connection 86. If necessary, the right-front corner brake module 14 may perform an analog-to-digital conversion of the sensor signals received from the modified sensor 28. From the right-front corner brake module 14, the sensor signals may then be communicated to the right-rear corner brake module 16, the left-rear corner brake module 18, the left-front corner brake module 12, the power distribution box 20 and the supervisory electronic control unit 22, either over the first channel (solid ray lines 82) of the serial communication bus by way of the star coupler 80 of modified sensor 28 and/or over the second channel (broken ray lines 84) of the serial communication bus by of the star coupler (not shown) of the modified sensor 30.

Furthermore, sensor signals from modified sensor 30 may be directly communicated to the left-front corner brake module 12 by connection 88. If necessary, the left-front corner brake module 12 may perform an analog-to-digital conversion of the sensor signals received from the modified sensor 30. From the left-front corner brake module 12, the sensor signals may then be communicated to the right-front corner brake module 14, the right-rear corner brake module 16, the left-rear corner brake module 18, the power distribution box 20 and the supervisory electronic control unit 22, either over the first channel (solid ray lines 82) of the serial communication bus by way of the star coupler 80 of the modified sensor 28 and/or over the second channel (broken ray lines 84) of the serial communication bus by way of the star coupler (not shown) of modified sensor 30.

Thus, modified sensors 28, 30 facilitate communication of information between all electronic control units in the system 10 and reduces costs by removing the complex, single pedal feel emulator electronic control unit and implementing a distributed E/E architecture using electronic control units already available in traditional brake-by-wire brake systems.

Furthermore, the system 10 enhances several safety points. First, by spatially distributing the driver's intent function and its related electronics on the whole E/E architecture, the residual probability of an occurrence of a spatial proximity fault is reduced. Second, in case of a communication bus loss, one or more of the modified pedal sensors is able to communicate directly with the corner brake modules, thereby reducing the risk of accident.

Although various aspects of the disclosed distributed E/E architectures for brake-by-wire brake systems have been shown and described, modifications may occur to those skilled in the art upon reading the specification. The present application includes such modifications and is limited only by the scope of the claims.

## Claims

1. A brake system comprising:
a communication bus;
a sensor (28, 30) including an integral star coupler (80), said star coupler being in communication with said communication bus, wherein said sensor generates a sensor signal;
a first electronic control unit (12, 14) directly connected to said sensor to receive said sensor signal, said first electronic control unit being in communication with said communication bus;
a second electronic control unit (12, 14) in communication with said communication bus, wherein said second electronic control unit receives said sensor signal over said communication bus by way of said star coupler,
said communication bus includes at least a first channel (82) and a second channel (84); further comprising:
a first brake pedal sensor (28) including an integral star coupler, said star coupler being in communication with said communication bus by way of said first channel (82), wherein said first sensor generates a first sensor signal;
a second brake pedal sensor (30)
including an integral star coupler, said star coupler being in communication with said communication bus by way of said second channel (84), wherein said second sensor generates a second sensor signal;
wherein said first electronic control unit (14) is directly connected to said first sensor (28) to directly receive said first sensor signal, said first electronic control unit being in communication with said first and said second channels; and
wherein said second electronic control unit (12) is directly connected to said second sensor (30) to directly received said second sensor signal, said second electronic control unit being in communication with said first and said second channels,
wherein said first electronic control unit receives said second sensor signal over said first channel by way of said first star coupler and said second channel by way of said second star coupler and wherein said second electronic control unit receives said first sensor signal over said first channel by way of said first star coupler and said second channel by way of said second star coupler.

2. The brake system according to claim 1 further comprising a brake switch (24) in direct communication with at least one of said first and said second electronic control units (12, 14).

3. The brake system according to anyone of the preceding claims, wherein said communication bus includes at least a first channel (82) and a second channel (84); further comprising:
a plurality of electronic control units (12, 14, 16, 18, 22), each electronic control unit of said plurality of electronic control units being in communication with said communication bus by way of at least one of said first channel and said second channel;
at least one park brake switch (25) in direct communication with at least one (12, 14) of said plurality of electronic control units;
at least one brake switch (24) in direct communication with at least one (12, 14, 22) of said plurality of electronic control units;
a plurality of sensors (26,28,30) at least one sensor of said plurality of sensors being in direct communication with at least one of said plurality of electronic control units,
wherein said plurality of sensors, said at least one park brake switch and said at least one brake switch provide a set of redundant, fail-safe signals to said plurality of electronic control units.

4. The brake system of claim 3 wherein a first one of said plurality of electronic control units is in communication with said communication bus by way of said first channel, a second one of said plurality of electronic control units is in communication with said communication bus by way of said second channel, and a third one of said plurality of electronic control units is in communication with said communication bus by way of said first channel and said second channel.

5. The brake system of claim 3 or 4 wherein said first channel (82) is implemented by a first star coupler (80) and said second channel (84) is implemented by a second star coupler, said first star coupler being integral with a first one of said plurality of sensors and said second star coupler being integral with a second one of said plurality of sensors.

6. The brake system of claim 5 wherein said first one of said plurality of sensors includes associated conditioning electronics, and wherein said first star coupler (80) is located in said conditioning electronics.

7. The brake system according to anyone of claims 3 to 6 wherein said communication bus includes a plurality of segments, wherein a first one of said plurality of segments includes at least one of said plurality of electronic control units and a second one of said plurality of segments includes at least one of said plurality of electronic control units, and wherein at least one of said plurality of sensors is directly connected to at least one of said electronic control units of said first segment and at least one of said plurality of sensors is directly connected to at least one of said electronic control units of said second segment.

8. The brake system of claim 7 wherein each of said plurality of electronic control units which receives a signal from at least one of said plurality of sensors is on an independent one of said plurality of segments of said communication bus.

9. The brake system according to anyone of claims 3 to 8 wherein said communication bus includes a first segment and a second segment, said first segment including a front-right corner brake module and a rear-left corner brake module, said second segment including a front-left corner brake module and a rear-right corner brake module, wherein at least one of said plurality of sensors is directly connected to at least one of said corner brake modules of said first segment, and wherein at least one of said plurality of sensors is directly connected to at least one of said corner brake modules of said second segment.

10. The brake system according to anyone of claims 3 to 9 wherein said communication bus includes a first segment and a second segment, said first segment including a front-right corner brake module and a front-left corner brake module, said second segment including a rear-right corner brake module and a rear-left corner brake module, wherein at least one of said plurality of sensors is directly connected to at least one of said corner brake modules of said first segment, and wherein at least one of said plurality of sensors is directly connected to at least one of said corner brake modules of said second segment.

11. The brake system according to anyone of claims 3 to 10 wherein said at least one brake switch is in direct communication with a first one of said plurality of electronic control units which is in direct communication with a first one of said plurality of sensors, and said at least one park brake switch is in direct communication with a second one of said plurality of electronic control units which is in direct communication with a second one of said plurality of sensors.

## Patentansprüche

1. Ein Bremssystem aufweisend:
einen Kommunikationsbus;
einen Sensor (28, 30) aufweisend einen integrierten Sternkoppler (80), welcher Sternkoppler mit dem Kommunikationsbus in Verbindung steht, wobei der Sensor ein Sensorsignal erzeugt;
eine erste elektronische Steuereinheit (12, 14), die direkt mit dem Sensor verbunden ist, um das Sensorsignal zu erhalten, wobei die erste elektronische Steuereinheit mit dem Kommunikationsbus in Verbindung steht;
eine zweite elektronische Steuereinheit (12, 14), die mit dem Kommunikationsbus in Verbindung steht, wobei die zweite elektronische Steuereinheit das Sensorsignal über den Kommunikationsbus via den Sternkoppler erhält,
wobei der Kommunikationsbus zumindest einen ersten Kanal (82) und einen zweiten Kanal (84) aufweist;
ferner aufweisend:
einen ersten Bremspedalsensor (28) aufweisend einen integrierten Sternkoppler, welcher Sternkoppler mit dem Kommunikationsbus via den ersten Kanal (82) in Verbindung steht, wobei der erste Sensor ein erstes Sensorsignal erzeugt;
einen zweiten Bremspedalsensor (30) aufweisend einen integrierten Sternkoppler, welcher Sternkoppler mit dem Kommunikationsbus via den zweiten Kanal (84) in Verbindung steht, wobei der zweite Sensor ein zweites Sensorsignal erzeugt;
wobei die erste elektronische Steuereinheit (14) direkt mit dem ersten Sensor (28) verbunden ist, um das erste Sensorsignal direkt zu erhalten, wobei die erste elektronische Steuereinheit mit dem ersten Kanal und mit dem zweiten Kanal in Verbindung steht; und
wobei die zweite elektronische Steuereinheit (12) direkt mit dem zweiten Sensor (30) verbunden ist, um das zweite Sensorsignal direkt zu erhalten, wobei die zweite elektronische Steuereinheit mit dem ersten Kanal und mit dem zweiten Kanal in Verbindung steht,
wobei die erste elektronische Steuereinheit das zweite Sensorsignal über den ersten Kanal via den ersten Sternkoppler und über den zweiten Kanal via den zweiten Sternkoppler erhält und wobei die zweite elektronische Steuereinheit das erste Sensorsignal über den ersten Kanal via den ersten Sternkoppler und über den zweiten Kanal via den zweiten Sternkoppler erhält.

2. Das Bremssystem gemäß Anspruch 1, ferner aufweisend einen Bremsswitch (24), der mit zumindest einer von den ersten und zweiten elektronischen Steuereinheiten (12, 14) in direkter Verbindung steht.

3. Das Bremssystem gemäß einem der vorhergehenden Ansprüche, wobei der Kommunikationsbus einen ersten Kanal (82) und einen zweiten Kanal (84) aufweist; ferner aufweisend:
eine Mehrzahl von elektronischen Steuereinheiten (12, 14, 16, 18, 22), wobei jede elektronische Steuereinheit der Mehrzahl von elektronischen Steuereinheiten via zumindest einen von dem ersten Kanal und dem zweiten Kanal mit dem Kommunikationsbus in Verbindung steht;
zumindest einen Parkbremsenswitch (25), der mit zumindest einer (12, 14) elektronischen Steuereinheit der Mehrzahl von elektronischen Steuereinheiten in direkter Verbindung steht;
zumindest einen Parkbremsenswitch (24), der mit zumindest einer (12, 14, 22) elektronischen Steuereinheit der Mehrzahl von elektronischen Steuereinheiten in direkter Verbindung steht;
eine Mehrzahl von Sensoren (26, 28, 30), wobei zumindest ein Sensor von der Mehrzahl von Sensoren mit zumindest einer elektronischen Steuereinheit der Mehrzahl von elektronischen Steuereinheiten in direkter Verbindung steht,
wobei die Mehrzahl von Sensoren, der zumindest eine Parkbremsenswitch und der zumindest eine Bremsswitch einen Satz von redundanten, fehlersicheren Signalen für die Mehrzahl von elektronischen Steuereinheiten bereitstellen.

4. Das Bremssystem gemäß Anspruch 3, wobei eine erste elektronische Steuereinheit der Mehrzahl von elektronischen Steuereinheiten via den ersten Kanal mit dem Kommunikationsbus in Verbindung steht, wobei eine zweite elektronische Steuereinheit der Mehrzahl von elektronischen Steuereinheiten via den zweiten Kanal mit dem Kommunikationsbus in Verbindung steht, und wobei eine dritte elektronische Steuereinheit der Mehrzahl von elektronischen Steuereinheiten via den ersten Kanal und den zweiten Kanal mit dem Kommunikationsbus in Verbindung steht.

5. Das Bremssystem gemäß Anspruch 3 oder 4, wobei der erste Kanal (82) durch einen ersten Sternkoppler (80) implementiert ist und der zweite Kanal (84) durch einen zweiten Sternkoppler implementiert ist, wobei der erste Sternkoppler integral mit einem ersten Sensor der Mehrzahl von Sensoren ist, und wobei der zweite Sternkoppler integral mit einem zweiten Sensor der Mehrzahl von Sensoren ist.

6. Das Bremssystem gemäß Anspruch 5, wobei der erste Sensor der Mehrzahl von Sensoren assoziierte Konditionierungselektronik aufweist, und wobei der erste Sternkoppler (80) sich in dieser Konditionierungselektronik befindet.

7. Das Bremssystem gemäß einem der Ansprüche 3 bis 6, wobei der Kommunikationsbus eine Mehrzahl von Segmenten aufweist, wobei ein erstes Segment der Mehrzahl von Segmenten zumindest eine elektronische Steuereinheit der Mehrzahl von elektronischen Steuereinheiten aufweist und wobei ein zweites Segment der Mehrzahl von Segmenten zumindest eine elektronische Steuereinheit der Mehrzahl von elektronischen Steuereinheiten aufweist, und wobei zumindest ein Sensor der Mehrzahl von Sensoren mit zumindest einer der elektronischen Steuereinheiten des ersten Segments direkt verbunden ist, und wobei zumindest ein Sensor der Mehrzahl von Sensoren mit zumindest einer der elektronischen Steuereinheiten des zweiten Segments direkt verbunden ist.

8. Das Bremssystem gemäß Anspruch 7, wobei jede elektronische Steuereinheit der Mehrzahl von elektronischen Steuereinheiten, die ein Signal von zumindest einem Sensor der Mehrzahl von Sensoren erhält, sich auf einem unabhängigen Segment der Mehrzahl von Segmenten des Kommunikationbusses befindet.

9. Das Bremssystem gemäß einem der Ansprüche 3 bis 8, wobei der Kommunikationsbus ein erstes Segment und ein zweites Segment aufweist, wobei das erste Segment ein vorn rechts Eckbremsmodul und ein hinten links Eckbremsmodul aufweist, wobei das zweite Segment ein vorn links Eckbremsmodul und ein hinten rechts Eckbremsmodul aufweist, wobei zumindest ein Sensor der Mehrzahl von Sensoren mit zumindest einem der Eckbremsmodule des ersten Segments direkt verbunden ist, und wobei zumindest ein Sensor der Mehrzahl von Sensoren mit zumindest einem der Eckbremsmodule des zweiten Segments direkt verbunden ist.

10. Das Bremssystem gemäß einem der Ansprüche 3 bis 9, wobei der Kommunikationsbus ein erstes Segment und ein zweites Segment aufweist, wobei das erste Segment ein vorn rechts Eckbremsmodul und ein vorn links Eckbremsmodul aufweist, wobei das zweite Segment ein hinten rechts Eckbremsmodul und ein hinten links Eckbremsmodul aufweist, wobei zumindest ein Sensor der Mehrzahl von Sensoren mit zumindest einem der Eckbremsmodule des ersten Segments direkt verbunden ist, und wobei zumindest ein Sensor der Mehrzahl von Sensoren mit zumindest einem der Eckbremsmodule des zweiten Segments direkt verbunden ist.

11. Das Bremssystem gemäß einem der Ansprüche 3 bis 10, wobei der zumindest eine Bremsswitch in direkter Verbindung mit einer ersten elektronischen Steuereinheit der Mehrzahl von elektronischen Steuereinheiten steht, welche in direkter Verbindung mit einem ersten Sensor der Mehrzahl von Sensoren steht, und wobei der zumindest eine Parkbremsenswitch in direkter Verbindung mit einer zweiten elektronischen Steuereinheit der Mehrzahl von elektronischen Steuereinheiten steht, welche in direkter Verbindung mit einem zweiten Sensor der Mehrzahl von Sensoren steht.

## Revendications

1. Système de freinage comprenant :
un bus de communication,
un capteur (28, 30), comportant un coupleur en étoile (80) qui en fait partie intégrante, ledit coupleur en étoile étant en communication avec ledit bus de communication, ledit capteur générant un signal capteur,
une première unité de commande électronique (12, 14) reliée directement audit capteur pour recevoir ledit signal capteur, ladite première unité de commande électronique étant en communication avec ledit bus de communication,
une seconde unité de commande électronique (12, 14) en communication avec ledit bus de communication, ladite seconde unité de commande électronique recevant ledit signal capteur via ledit bus de communication par l'intermédiaire dudit coupleur en étoile,
système, dans lequel ledit bus de communication comporte au moins un premier canal (82) et un second canal (84), comprenant en outre :
un premier capteur de pédale de frein (28) comportant un coupleur en étoile qui en fait partie intégrante, ledit coupleur en étoile étant en communication avec ledit bus de communication par l'intermédiaire dudit premier canal (82), ledit premier capteur générant un premier signal capteur,
un second capteur de pédale de frein (30) comportant un coupleur en étoile qui en fait partie intégrante, ledit coupleur en étoile étant en communication avec ledit bus de communication par l'intermédiaire dudit second canal (84), ledit second capteur générant un second signal capteur,
ladite première unité de commande électronique (14) est reliée directement audit premier capteur (28) pour recevoir directement ledit premier signal capteur, ladite première unité de commande électronique étant en communication avec lesdits premiers et seconds canaux,
ladite seconde unité de commande électronique (12) est directement reliée audit second capteur (30) pour recevoir directement ledit second signal capteur, ladite seconde unité de commande électronique étant en communication avec lesdits premier et second canaux,
ladite première unité de commande électronique reçoit ledit second signal de capteur via ledit premier canal par l'intermédiaire dudit premier coupleur en étoile et via ledit second canal par l'intermédiaire dudit second coupleur en étoile, ladite seconde unité de commande électronique recevant ledit premier signal capteur via ledit premier canal par l'intermédiaire dudit premier coupleur en étoile et via ledit second canal par l'intermédiaire dudit second coupleur en étoile.

2. Système de freinage suivant la revendication 1, comprenant, en outre, un commutateur de frein (24) en communication directe avec au moins une desdites première et seconde unités de commande électroniques (12, 14).

3. Système de freinage suivant une quelconque des revendications précédentes, dans lequel ledit bus de communication comporte au moins un premier canal (82) et un second canal (84), système comprenant en outre :
une pluralité d'unités de commande électroniques (12, 14, 16, 18, 22), dont chacune est en communication avec ledit bus de communication via au moins un parmi ledit premier et ledit second canal,
au moins un commutateur de frein de stationnement (25) en communication avec au moins une unité de commande électronique (12, 14) de ladite pluralité d'unités de commande électroniques,
au moins un commutateur de frein (24) en communication directe avec au moins une unité de commande électronique (12, 14, 22) de ladite pluralité d'unités de commande électroniques,
une pluralité de capteurs (26, 28, 30), dont au moins un capteur est en communication directe avec au moins une unité de commande électronique de la pluralité de commandes électroniques, ladite pluralité de capteurs,
système, dans lequel ledit au moins un commutateur de frein de stationnement et ledit au moins un commutateur de frein fournissent un ensemble de signaux redondants fiables auxdites unités de commande électroniques.

4. Système de freinage suivant la revendication 3, dans lequel une première unité de commande électronique de ladite pluralité d'unités de commande électroniques est en communication avec ledit bus de communication via ledit premier canal, une seconde unité de commande électronique de ladite pluralité d'unités de commande électroniques est en communication avec ledit bus de communication via ledit second canal, et une troisième unité de commande électronique de ladite pluralité d'unités de commande électroniques est en communication avec ledit bus de communication via ledit premier et ledit second canal.

5. Système de freinage suivant la revendication 3 ou 4, dans lequel ledit premier canal (82) est implémenté par un premier coupleur en étoile (80) et ledit second canal (84) est implémenté par un second coupleur en étoile, ledit premier coupleur en étoile faisant partie intégrante d'un premier capteur de ladite pluralité de capteurs et le second coupleur en étoile faisant partie intégrante d'un second capteur de ladite pluralité de capteurs.

6. Système de freinage suivant la revendication 5, dans lequel ledit premier capteur de ladite pluralité de capteurs comporte des composants électroniques de conditionnement associés et ledit premier coupleur en étoile (80) est situé dans lesdits composants électroniques de conditionnement.

7. Système de freinage suivant une quelconque des revendications 3 à 6, dans lequel ledit bus de communication comporte une pluralité de segments, dont un premier segment comporte au moins une unité de commande électronique de ladite pluralité d'unités électroniques et dont un second segment comporte au moins une unité de commande électronique de ladite pluralité d'unités de commande électroniques et au moins un capteur de ladite pluralité de capteurs est relié directement à au moins une desdites unités de commande électroniques dudit premier segment et au moins un capteur de ladite pluralité de capteurs est directement relié à au moins une desdites unités de commande électroniques dudit second segment.

8. Système de freinage suivant la revendication 7, dans lequel chaque unité de commande électronique de ladite pluralité d'unités de commande électroniques qui reçoit un signal par au moins un capteur de ladite pluralité de capteurs, se situe sur un segment indépendant parmi la pluralité de segments dudit bus de communication.

9. Système de freinage suivant une quelconque des revendications 3 à 8, dans lequel ledit bus de communication comporte un premier segment et un second segment, ledit premier segment comportant un module de freinage avant droite et un module de freinage arrière gauche, ledit second segment comportant un module de freinage avant gauche et un module de freinage arrière droite, au moins un capteur de la pluralité de capteurs est relié directement à au moins un desdits modules de freinage du premier segment et au moins un capteur de la pluralité de capteurs est relié directement à au moins un desdits modules de freinage dudit second segment.

10. Système de freinage suivant une quelconque des revendications 3 à 9, dans lequel ledit bus de communication comporte un premier segment et un second segment, ledit premier segment comportant un module de freinage avant droite et un module de freinage avant gauche et ledit second segment comportant un module de freinage arrière droite et un module de freinage arrière gauche, au moins un capteur de ladite pluralité de capteurs est relié directement à au moins un desdits modules de freinage dudit premier segment et au moins un capteur de ladite pluralité de capteurs est relié directement à au moins un desdits modules de freinage dudit second segment.

11. Système de freinage suivant une quelconque des revendications 3 à 10, dans lequel ledit au moins un commutateur de frein est en communication directe avec une première unité de commande électronique parmi ladite pluralité d'unités de commande électroniques, première unité de commande électronique qui est en communication directe avec un premier capteur parmi ladite pluralité de capteurs et ledit au moins un commutateur de frein de stationnement est en communication directe avec une seconde unité de commande électronique parmi ladite pluralité d'unités de commande électroniques, seconde unité de commande électronique qui est en communication directe avec un second capteur parmi ladite pluralité de capteurs.
